# EUROPEAN PATENT APPLICATION

(11) **EP 2 892 100 A1**
(43) Date of publication of application: **08.07.2015**
(21) Application number: 13834269.6
(22) Date of filing: 30.08.2013
(51) Int. Cl.: H01M 8/04, H01M 8/00, H01M 8/10, H01M 8/12

(54) **POWER GENERATION SYSTEM AND METHOD FOR OPERATING SAME**

(30) Priority: 30.08.2012 JP 2012189495
(71) Applicant: Panasonic Intellectual Property Management Co., Ltd., Osaka-shi, Osaka 540-6207 (JP)
(72) Inventor: TATSUI, Hiroshi, Osaka-shi Osaka 540-6207 (JP); MORITA, Junji, Osaka-shi Osaka 540-6207 (JP); YUKIMASA, Akinori, Osaka-shi Osaka 540-6207 (JP); WAKAMATSU, Hidetoshi, Osaka-shi Osaka 540-6207 (JP); INOUE, Atsutaka, Osaka-shi Osaka 540-6207 (JP)
(74) Representative: Grünecker Patent- und Rechtsanwälte PartG mbB
(86) International application number: PCT/JP2013/005148
(87) International publication number: WO 2014/034141

(57) **Abstract**

A power generation system 100 includes a fuel cell unit 101, a combustion apparatus 103, and a controller 102. The fuel cell unit 101 includes a fuel cell 11, a casing 12, a ventilation fan (an air supply device) 13, and a temperature detector 81 configured to detect the temperature of outside air supplied to the casing. An air supply passage 78 through which the outside air is supplied to the casing, and a discharge passage 70 through which a flue gas from the combustion apparatus is discharged, are configured in such a manner as to allow a medium flowing through the air supply passage 78 and a medium flowing through the discharge passage 70 to exchange heat with each other. When the fuel cell unit is to be started up, if the temperature detected by the temperature detector is lower than or equal to a predetermined first temperature and the combustion apparatus is not in operation, the controller refrains from causing the fuel cell unit to operate.

## Description

### Technical Field

The present invention relates to power generation systems that include a fuel cell unit and a combustion apparatus, and methods of operating the same.

### Background Art

A power generation system serving as a co-generation system is a system configured to: generate and supply electric power to a consumer, thereby covering the consumer's electricity load; and recover and store exhaust heat that is generated when generating the electric power, thereby covering the consumer's hot water load. As one of such co-generation systems, there is a known co-generation system in which a fuel cell unit and a water heater are operated by using the same raw material (see Patent Literature 1, for example). Patent Literature 1 discloses a co-generation system that includes: a fuel cell; a heat exchanger configured to recover heat that is generated when the fuel cell operates; a hot water storage tank configured to store water that is heated while the water circulates through the heat exchanger; and a water heater having a function of heating up water that flows out of the hot water storage tank to a predetermined temperature. In this system, the fuel cell unit and the water heater are configured to operate by using the same raw material.

There is also a known fuel cell power generator that is intended to improve the exhaust performance of a fuel cell unit installed inside a building (see Patent Literature 2, for example). The fuel cell unit disclosed in Patent Literature 2 is installed and used inside a building that is provided with an air inlet. The fuel cell unit includes: an air introduction port, through which the air inside the building is introduced into the fuel cell unit; an air exhaust pipe, through which the air inside the fuel cell unit is discharged to the outside of the building; and a ventilator. The ventilator guides the air outside the building into the building through the air inlet, such that the air is further introduced into the fuel cell unit through the air introduction port, and such that the air is then discharged to the outside of the building through the air exhaust pipe.

Further, there is a known fuel cell unit that is installed inside a building and that includes a vertically-extending duct for the purpose of improving the performance of discharging exhaust gas generated in the fuel cell unit (see Patent Literature 3, for example). In the fuel cell unit disclosed in Patent Literature 3, the duct has a double-pipe structure and extends vertically inside the building, and the top end of the duct is positioned outside the building. A ventilation pipe and an exhaust gas pipe are connected to the duct, such that each of the exhaust gas and air separately flows through a corresponding one of the inner side and the outer side of the duct.

In the case of installing the co-generation system disclosed in Patent Literature 1 inside a building by reference to the fuel cell units disclosed in Patent Literature 2 and Patent Literature 3, it is conceivable to adopt a configuration in which a fuel cell unit and a hot water supply unit provided with a water heater are installed separately, the configuration including an exhaust gas passage, via which the fuel cell unit and the water heater are in communication with each other.

If the fuel cell unit thus configured and installed inside the building is operated when the outside air temperature is a sub-zero temperature, then the cold sub-zero outside air is supplied into the fuel cell unit. Accordingly, there is a risk that water generated inside the fuel cell, and the like, freezes up due to the outside air, which may result in hindering the operation of the fuel cell unit. In view of this problem, there is a known fuel cell unit that is configured to prevent freezing of water generated inside the fuel cell (see Patent Literature 4, for example). The fuel cell unit disclosed in Patent Literature 4 is configured to cause heat exchange between exhaust air discharged from the fuel cell and supply air supplied to the fuel cell, the supply air being outside air, such that the supply air is heated up through the heat exchange, thereby preventing the freezing.

### Citation List

### Patent Literature

PTL 1: Japanese Laid-Open Patent Application Publication No. 2007-248009
PTL 2: Japanese Laid-Open Patent Application Publication No. 2006-73446
PTL 3: Japanese Laid-Open Patent Application Publication No. 2008-210631
PTL 4: Japanese Laid-Open Patent Application Publication No. 2009-238390

### Summary of Invention

### Technical Problem

However, in a case where such a fuel cell unit configuration as disclosed in Patent Literature 4 is adopted, if, for example, the fuel cell unit starts operating from a stopped state when the outside air temperature is a sub-zero temperature, then since the temperature of the exhaust air discharged from the fuel cell has not sufficiently increased yet, the supply air is not heated up, which may cause freezing of water generated inside the fuel cell.

Generally speaking, a fuel cell unit is often configured such that, at the time of operating the fuel cell unit, in order to ventilate the inside of the casing of the fuel cell unit, exhaust gas is discharged after outside air is supplied into the casing. In this respect, Patent Literature 4 gives no description regarding heating of ventilation air of the fuel cell unit disclosed therein. If the inside ofthe casing of the fuel cell unit of Patent Literature 4 is ventilated when the fuel cell unit starts operating, then outside air of a sub-zero temperature is supplied into the casing of the fuel cell unit. This causes a risk of freezing of, for example, cooling water of the fuel cell and/or condensation water previously built up in fuel gas piping and/or off gas piping during a stopped state of the fuel cell unit.

As described above, conventional fuel cell units fail to take sufficient measures against freezing that occurs when a fuel cell unit starts up under the condition, in particular, that the outside air temperature is low.

The present invention has been made to solve the above-described conventional problems. An object of the present invention is to provide a power generation system and a method of operating the same, which are capable of a stable start-up operation of a fuel cell unit at the time of starting up the fuel cell unit even when the outside air temperature is low.

### Solution to Problem

In order to solve the above-described conventional problems, a power generation system according to the present invention includes: a fuel cell unit including a fuel cell configured to generate electric power by using a fuel gas and an oxidizing gas, a casing housing the fuel cell, an air supply device configured to introduce outside air into the casing through an air supply passage, and a temperature detector configured to detect a temperature of the outside air; a combustion apparatus configured to combust a combustible gas and discharge a flue gas through a discharge passage; and a controller. The air supply passage is configured to exchange heat with the discharge passage. The controller is configured to refrain from causing the fuel cell unit to start up even if a start-up signal has been inputted to the fuel cell unit if the temperature detected by the temperature detector is lower than or equal to a predetermined first temperature and the combustion apparatus is not in operation.

### Advantageous Effects of Invention

According to the power generation system of the present invention, even if a start-up operation of the fuel cell unit is performed when the temperature of the outside air is low, freezing inside the fuel cell unit can be prevented since the outside air that is supplied to the fuel cell unit is heated up. This makes it possible to allow the power generation system to operate in a stable manner.

### Brief Description of Drawings

[Fig. 1] Fig. 1 is a schematic diagram showing the configuration of a power generation system according to Embodiment 1 of the present invention.
[Fig. 2] Fig. 2 is a flowchart showing operations of the power generation system of Fig. 1.
[Fig. 3] Fig. 3 is a schematic diagram showing the configuration of a power generation system according to Embodiment 2 of the present invention.
[Fig. 4] Fig. 4 is a flowchart showing Operation 1 of the power generation system of Fig. 3.
[Fig. 5] Fig. 5 is a flowchart showing Operation 2 of the power generation system of Fig. 3.
[Fig. 6] Fig. 6 is a schematic diagram showing the configuration of a power generation system according to Embodiment 3 of the present invention.
[Fig. 7] Fig. 7 is a flowchart showing operations of a power generation system according to another embodiment of the present invention.

A power generation system according to a first aspect of the present invention includes: a fuel cell unit including a fuel cell configured to generate electric power by using a fuel gas and an oxidizing gas, a casing housing the fuel cell, an air supply device configured to introduce outside air into the casing through an air supply passage, and a temperature detector configured to detect a temperature of the outside air; a combustion apparatus configured to combust a combustible gas and discharge a flue gas through a discharge passage; and a controller. The air supply passage is configured to exchange heat with the discharge passage. The controller is configured to refrain from causing the fuel cell unit to start up even if a start-up signal has been inputted to the fuel cell unit if the temperature detected by the temperature detector is lower than or equal to a predetermined first temperature and the combustion apparatus is not in operation.

According to the above configuration, when the temperature of the outside air is low and the combustion apparatus is not in operation, the fuel cell unit does not start up. Therefore, at start-up of the fuel cell unit, a risk that the low-temperature outside air is introduced into the casing without being heated by exhaust gas from the combustion apparatus is eliminated, which makes it possible to prevent freezing of water inside the fuel cell unit.

A power generation system according to a second aspect of the present invention may be configured such that, in the first aspect of the present invention, the controller is configured to: cause the air supply device to operate if a start-up signal has been inputted to the fuel cell unit; and refrain from causing the fuel cell unit to start up if the temperature detected by the temperature detector is lower than or equal to the first temperature and the combustion apparatus is not in operation.

According to the above configuration, the outside air flows into the air supply passage when the air supply device operates. This allows the temperature detector to more precisely measure the temperature of the outside air that is introduced into the casing through the air supply passage.

A power generation system according to a third aspect of the present invention may be configured such that, in the first or second aspect of the present invention, if the temperature detected by the temperature detector is lower than or equal to the first temperature, the controller causes the fuel cell unit to start up after the combustion apparatus has operated. Here, "after the combustion apparatus has operated" means that the combustion apparatus has started operating and is still in operation.

According to the above configuration, the fuel cell unit starts up in a state where the outside air that is supplied to the casing is heated by the flue gas from the combustion apparatus. This makes it possible to prevent water inside the fuel cell unit from freezing up due to low-temperature outside air, and allow the fuel cell unit to operate in a stable manner.

A power generation system according to a fourth aspect of the present invention may be configured such that, in the third aspect of the present invention, if the temperature detected by the temperature detector is lower than or equal to the first temperature, the controller refrains from stopping the combustion apparatus for a predetermined first period after the fuel cell unit has started a start-up.

A power generation system according to a fifth aspect of the present invention may be configured such that, in the third aspect of the present invention, if the temperature detected by the temperature detector is lower than or equal to the first temperature, the controller refrains from stopping the combustion apparatus from when the fuel cell unit starts up to when the temperature detected by the temperature detector becomes a predetermined second temperature.

According to the above configuration, until the predetermined condition is satisfied, the combustion apparatus is not stopped, and the combustion apparatus and the fuel cell unit are both kept in operation. As a result, the outside air is heated by the flue gas from the combustion apparatus and exhaust gas from the fuel cell unit, and thereby freezing of water in the fuel cell unit can be prevented more assuredly.

A power generation system according to a sixth aspect of the present invention may be configured such that, the power generation system according to any one of the first to fifth aspects of the present invention includes load measuring means configured to measure at least one of an amount of electric power and an amount of heat consumed by a user of the power generation system. The controller may: operate the fuel cell unit in accordance with the first operation plan, which is created based on at least one of the amount of electric power and the amount of heat measured by the load measuring means; and control the combustion apparatus in accordance with the second operation plan, which is created based on an operating period set by the user.

According to the above configuration, also in the case where the fuel cell unit and the combustion apparatus are controlled in accordance with the respective operation plans, the fuel cell unit is not started up if the temperature of the outside air is low and the combustion apparatus is not in operation. This makes it possible to prevent water in the fuel cell unit from freezing up due to the low-temperature outside air, and allow the fuel cell unit to operate in a stable manner.

A power generation system according to a seventh aspect of the present invention may be configured such that, in the sixth aspect of the present invention, in a case where a start-up time of the combustion apparatus, which is specified in the second operation plan, is set as a time that is subsequent to a start-up time of the fuel cell unit, which is specified in the first operation plan, if the temperature detected by the temperature detector is lower than or equal to the first temperature, the controller changes at least one of the first operation plan and the second operation plan, such that the start-up time of the combustion apparatus becomes a time that is prior to the start-up time of the fuel cell unit.

The above configuration makes it possible to prevent freezing in the fuel cell unit while responding to demands for an amount of electric power and/or an amount of heat supplied from the power generation system.

A power generation system operating method according to an eighth aspect of the present invention is a method of operating a power generation system, the power generation system including: a fuel cell unit configured such that a fuel cell is housed inside a casing, into which outside air is introduced through an air supply passage; and a combustion apparatus configured to combust a combustible gas and discharge a flue gas through a discharge passage, the flue gas being generated as a result of combusting the combustible gas. The air supply passage and the discharge passage are configured in such a manner as to allow a medium flowing through the air supply passage and a medium flowing through the discharge passage to exchange heat with each other. The method includes: detecting a temperature of the outside air that is introduced into the casing; and refraining from causing the fuel cell unit to start up if the detected temperature is lower than or equal to the first temperature and the combustion apparatus is not in operation.

### Description of Embodiments

Hereinafter, preferred embodiments of the present invention are described with reference to the drawings. In the drawings, the same or corresponding components are denoted by the same reference signs, and repeating the same descriptions is avoided below.

### (Embodiment 1)

### (Configuration of Power Generation System)

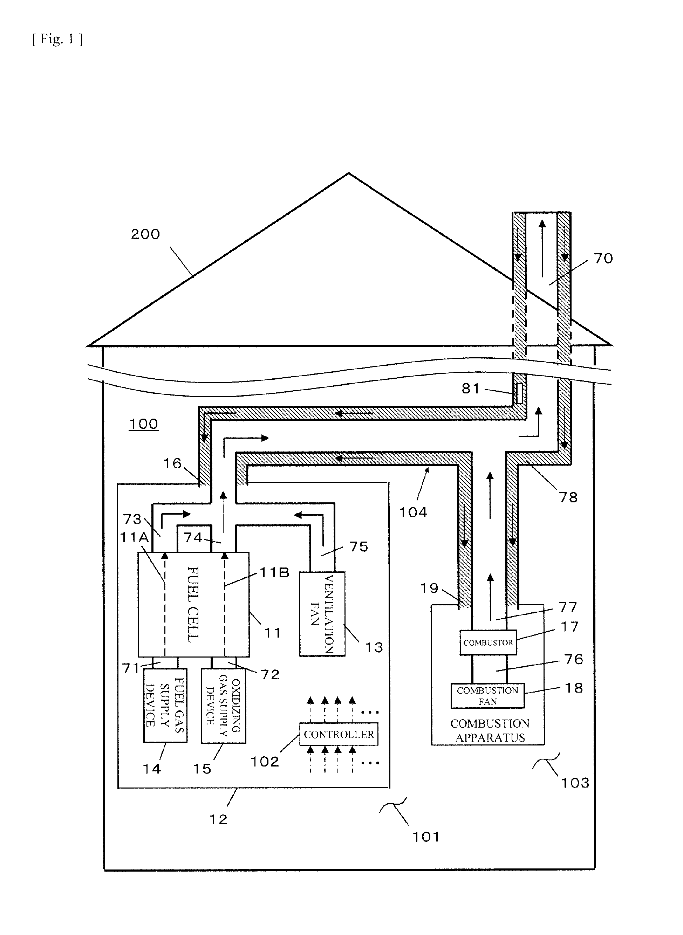

Hereinafter, the configuration of a power generation system 100 according to Embodiment 1 is described with reference to the drawings. Fig. 1 shows the configuration of the power generation system 100 according to Embodiment 1. As shown in Fig. 1, the power generation system 100 is installed inside a building 200. The power generation system 100 includes a fuel cell unit 101, a controller 102, a combustion apparatus 103, and a supply and exhaust mechanism 104.

The fuel cell unit 101 includes a fuel cell 11, a ventilation fan 13, a fuel gas supply device 14, an oxidizing gas supply device 15, and a casing 12. The fuel cell 11, the ventilation fan 13, the fuel gas supply device 14, and the oxidizing gas supply device 15 are arranged in the casing 12. A hole 16 is formed in a wall of the casing 12 at a suitable position, the hole 16 extending through the wall in its thickness direction. Piping of the supply and exhaust mechanism 104 is connected to the hole 16.

The supply and exhaust mechanism 104 includes a discharge passage 70 and an air supply passage 78. The supply and exhaust mechanism 104 is constituted by piping that forms the discharge passage 70 and piping that forms the air supply passage 78. One end ofthe piping ofthe supply and exhaust mechanism 104 is open to the outside of the power generation system 100. The piping of the supply and exhaust mechanism 104 branches into branch pipes. One of the branch pipes is connected to the fuel cell unit 101, and the other branch pipe is connected to the combustion apparatus 103. Accordingly, air is supplied to the fuel cell unit 101 and the combustion apparatus 103 of the power generation unit 100 from the outside of the power generation system 100. Hereinafter, the supplied air is referred to as "outside air".

In the supply and exhaust mechanism 104, the piping forming the discharge passage 70 and the piping forming the air supply passage 78 form a double pipe, for example. The double pipe is configured such that the piping forming the discharge passage 70 is disposed inside of the piping forming the air supply passage 78. The double pipe is connected to the hole 16 of the casing 12. Accordingly, of the hole 16, the opening of the piping of the discharge passage 70 serves as an exhaust outlet, and the opening of the gap between the piping of the air supply passage 78 and the piping of the discharge passage 70 serves as an air inlet.

The discharge passage 70 is configured such that the upstream end thereof is connected to the hole 16 of the casing 12, and exhaust gas discharged from the fuel cell unit 101 flows through the discharge passage 70. The discharge passage 70 is formed in such a manner as to extend to the outside of the building 200, and the downstream end (opening) of the discharge passage 70 is open to the atmosphere. The downstream end of the air supply passage 78 is connected to the hole 16 of the casing 12, and the upstream end (opening) of the air supply passage 78 is open to the atmosphere. Through the air supply passage 78, air can be supplied from the outside of the fuel cell unit 101 (here, from the outside of the building 200).

The air supply passage 78 includes a temperature detector 81. The temperature detector 81 is a temperature sensor configured to detect the temperature of the outside air that is supplied to the casing 12. The temperature detector 81 detects the temperature of air flowing through the air supply passage 78, and outputs the detected temperature to the controller 102. The temperature detector 81 is disposed between the upstream end and a branch point of the air supply passage 78. However, the temperature detector 81 may be disposed at any position, so long as the position allows the temperature detector 81 to detect the temperature of the outside air that is supplied to the casing 12 of the fuel cell unit 101. For example, the temperature detector 81 may be provided in a branch pipe that extends from the branch point of the air supply passage 78 to the hole 16 of fuel cell unit 101. Alternatively, of the temperature detector 81, the sensor part may be disposed inside the air supply passage 78, and the other part may be disposed outside the air supply passage 78. Further alternatively, the temperature detector 81 may be disposed outside the building 200, for example, on a wall of the house. In this case, the temperature detector 81 can precisely measure a temperature T of the outside air without requiring the ventilation fan 13 to operate.

The fuel gas supply device 14 is a device configured to supply a fuel gas (hydrogen gas) to the fuel cell 11 while adjusting the flow rate of the fuel gas. For example, a hydrogen generation apparatus, a hydrogen canister, or a hydrogen storage alloy is used for the fuel gas supply device 14. The inlet of a fuel gas passage 11A of the fuel cell 11 is connected to the fuel gas supply device 14 via a fuel gas supply passage 71.

The oxidizing gas supply device 15 is a device configured to supply an oxidizing gas (air) to the fuel cell 11 while adjusting the flow rate of the oxidizing gas. For example, a fan device, such as a fan or a blower, is used as the oxidizing gas supply device 15. The air inlet of the oxidizing gas supply device 15 is open to the interior space of the casing 12, and the exhaust outlet of the oxidizing gas supply device 15 is connected to the inlet of an oxidizing gas passage 11 B of the fuel cell 11 via an oxidizing gas supply passage 72. Accordingly, in this case, the outside air that is introduced into the casing 12 is used as the oxidizing gas.

The fuel cell 11 includes an anode and a cathode (which are not shown). The fuel cell 11 is configured such that the fuel gas that is supplied to the fuel gas passage 11A is supplied to the anode while the fuel gas is flowing through the fuel gas passage 11 A. Similarly, the oxidizing gas that is supplied to the oxidizing gas passage 11B is supplied to the cathode while the oxidizing gas is flowing through the oxidizing gas passage 11 B. The fuel gas supplied to the anode and the oxidizing gas supplied to the cathode react with each other. As a result, electric power and heat are generated. The electric power generated by the fuel cell 11 is supplied to an external electrical load (e.g., a household electrical appliance) via a power conditioner, which is not shown. The generated heat is recovered by a heating medium flowing through a heating medium passage, which is not shown. The heat recovered by the heating medium is used for, for example, heating up water in a hot water storage tank (not shown).

Various types of fuel cells, such as a polymer electrolyte fuel cell or a solid oxide fuel cell, may be used as the fuel cell 11. Since the configuration of the fuel cell 11 is the same as that of a general fuel cell, a detailed description of the configuration of the fuel cell 11 is omitted.

The upstream end of an off fuel gas passage 73 is connected to the outlet of the fuel gas passage 11A. The downstream end of the off fuel gas passage 73 is connected to the discharge passage 70. The upstream end of an off oxidizing gas passage 74 is connected to the outlet of the oxidizing gas passage 11B. The downstream end of the off oxidizing gas passage 74 is connected to the discharge passage 70. Accordingly, the fuel gas that has not been used by the fuel cell 11 (which will hereinafter be referred to as an off fuel gas) is discharged from the outlet of the fuel gas passage 11A to the discharge passage 70 through the off fuel gas passage 73. Similarly, the oxidizing gas that has not been used by the fuel cell 11 (which will hereinafter be referred to as an off oxidizing gas) is discharged from the outlet of the oxidizing gas passage 11B to the discharge passage 70 through the off oxidizing gas passage 74. The off fuel gas discharged to the discharge passage 70 is diluted by the off oxidizing gas, and then discharged to the outside of the building 200.

The ventilation fan 13 is an air supply device configured to introduce the outside air into the casing 12 through the air supply passage 78. The intake port of the ventilation fan 13 is open to the interior space of the casing 12, and the delivery port of the ventilation fan 13 is connected to the discharge passage 70 via a ventilation passage 75. The ventilation fan 13 may be configured in any form, so long as the ventilation fan 13 is configured to ventilate the inside of the casing 12. When the ventilation fan 13 is operated, the gas inside the casing 12 is sucked through the intake port, and is then sent out of the delivery port. This causes the air outside the power generation system 100 (the outside air) to be supplied into the casing 12 from the hole 16, which serves as an air inlet, through the air supply passage 78. Meanwhile, the gas inside the casing 12 (mainly air) is discharged to the outside of the building 200 through the ventilation fan 13, the ventilation passage 75, and the discharge passage 70. As a result, the inside of the casing 12 is ventilated. Although in Embodiment 1 a fan is used as the ventilator, the ventilator is not limited to a fan, but may be a blower, for example. Although the ventilation fan 13 is disposed inside the casing 12, Embodiment 1 is not thus limited. Alternatively, the ventilation fan 13 may be disposed inside the discharge passage 70.

As described above, in Embodiment 1, the off fuel gas, the off oxidizing gas, and the gas inside the casing 12 are indicated as examples of exhaust gas discharged from the fuel cell unit 101. However, the exhaust gas discharged from the fuel cell unit 101 is not limited to these gases. For example, in a case where the fuel gas supply device 14 is configured as a hydrogen generation apparatus, the exhaust gas discharged from the fuel cell unit 101 may contain gases discharged from the hydrogen generation apparatus (a flue gas, a hydrogen-containing gas, etc.).

In Embodiment 1, the oxidizing gas and the gas inside the casing 12 are indicated as examples of the outside air that is supplied to the fuel cell unit 101. However, the outside air supplied to the fuel cell unit 101 is not limited to these gases (air). For example, in a case where the fuel gas supply device 14 is configured as a hydrogen generation apparatus, the outside air supplied to the fuel cell unit 101 may be combustion air supplied to the hydrogen generation apparatus. Alternatively, if the hydrogen generation apparatus includes a selective oxidizer, the outside air supplied to the fuel cell unit 101 may be selective oxidation air supplied to the selective oxidizer. Further alternatively, the outside air supplied to the fuel cell unit 101 may be bleed air that is supplied to the anode of the fuel cell 11 for the purpose of preventing a catalyst from being poisoned by carbon monoxide.

The combustion apparatus 103 is an apparatus configured to heat up hot water that has been heated by exhaust heat from the fuel cell unit 101. The combustion apparatus 103 is, for example, a water heater. The combustion apparatus 103 includes a combustor 17 and a combustion fan 18. The combustion fan 18 supplies air (combustion air) to the combustor 17 through a combustion air supply passage 76. The intake port of the combustion fan 18 is open to the interior space of the combustion apparatus 103, and the delivery port of the combustion fan 18 is connected to the combustor 17 via the combustion air supply passage 76. The combustion fan 18 may be configured in any form, so long as the combustion fan 18 is configured to supply combustion air to the combustor 17. For example, the combustion fan 18 may be configured as a fan device, such as a fan or a blower.

The combustor 18 is provided on the hot water storage tank or on hot water supply piping connected to the hot water storage tank for the purpose of heating up hot water in the hot water storage tank as necessary. For example, a boiler configured to combust a combustible gas is used as the combustor 18. The hot water storage tank stores hot water that has been heated by exhaust heat from the fuel cell unit 101. A combustion fuel supply device (not shown) is connected to the combustor 17. The combustion fuel supply device supplies the combustor 17 with a combustion fuel, which is, for example, a combustible gas such as natural gas or a liquid fuel such as kerosene. The combustor 17 combusts the combustion air supplied from the combustion fan 18 and the combustion fuel supplied from the combustion fuel supply device. As a result, heat and a flue gas are generated. The generated heat is used for, for example, heating up hot water discharged from the hot water storage tank. It should be noted that a distributing pipe that connects to a water pipe is also connected to the combustor 18, and the generated heat may be used for heating up water supplied from the distributing pipe.

The upstream end of an exhaust gas passage 77 is connected to the combustor 17, and the downstream end of the exhaust gas passage 77 is connected to the discharge passage 70. Accordingly, the flue gas generated in the combustor 17 is discharged to the discharge passage 70 through the exhaust gas passage 77. The flue gas discharged to the discharge passage 70 flows through the discharge passage 70, and is then discharged to the outside of the building 200.

A hole 19 is formed in a wall of the combustion apparatus 103 at a suitable position, the hole 19 extending through the wall in its thickness direction. Piping that forms the discharge passage 70 and piping that forms the air supply passage 78 (i.e., a double pipe) are connected to the hole 19. Accordingly, of the hole 19, the opening of the piping of the discharge passage 70 serves as an exhaust outlet, and the opening of the gap between the piping of the air supply passage 78 and the piping of the discharge passage 70 serves as an air inlet. According to this configuration, when the combustion apparatus 103 operates, the flue gas, which has a relatively high temperature, is discharged from the combustion apparatus 103 and flows through the exhaust gas passage 77 and the discharge passage 70. Meanwhile, the outside air flows through the air supply passage 78, and flows into the combustion apparatus 103 through the air inlet of the hole 19. Then, the flue gas exchanges heat with the air that flows through the air supply passage 78 disposed outside the discharge passage 70, thereby heating the air that flows through the air supply passage 78.

The controller 102 is disposed inside the casing 12 of the fuel cell unit 101. However, the position where the controller 102 is disposed is not thus limited. Alternatively, the controller 102 may be disposed outside the casing 12.

The controller 102 is a device configured to control component devices of the power generation system 100. The controller 102 includes an arithmetic processing unit and a storage unit. Examples of the arithmetic processing unit include a microprocessor, a CPU, a microcomputer, an MPU, a PLC (programmable logic controller), and a logic circuit. The storage unit is configured as, for example, a memory storing programs for executing control operations. Through the loading and execution, by the arithmetic processing unit, of a predetermined control program stored in the storage unit, the controller 102 processes various information and performs various controls of the power generation system 100. It should be noted that the controller 102 may be configured not only as a single controller, but as a group of multiple controllers that operate in cooperation with each other to control the power generation system 100 (which is a co-generation system).

(Operations of Power Generation System)

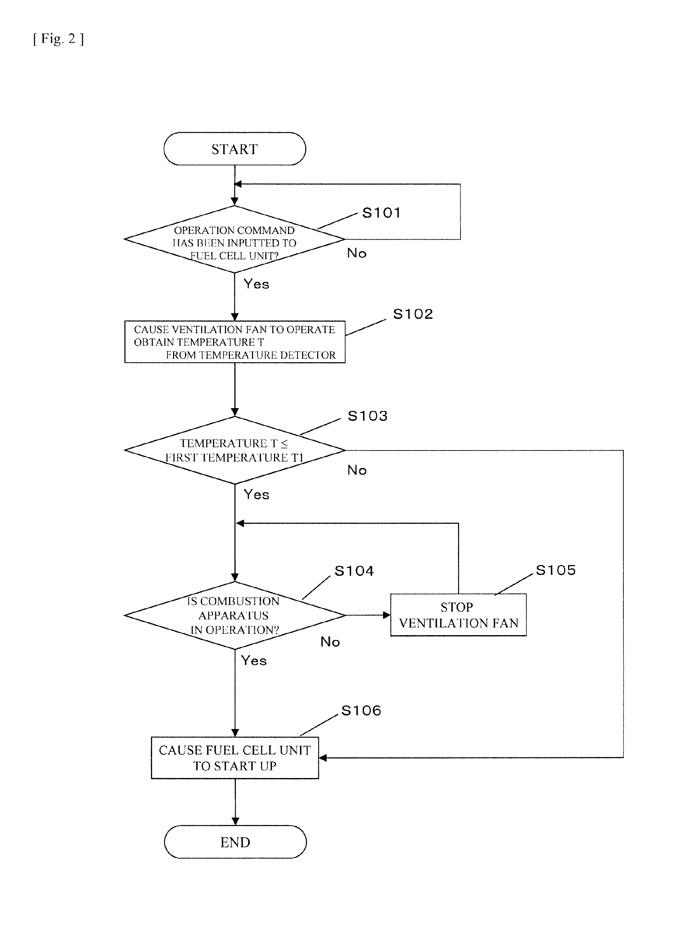

Next, operations of the power generation system 100 according to Embodiment 1 are described with reference to Fig. 1 and Fig. 2. A "start-up operation" of the fuel cell unit 101 herein is an operation that the fuel cell unit 101 performs until the fuel cell unit 101 starts a power generation operation. It should be noted that since the start-up operation and the power generation operation of the fuel cell unit 101 of the power generation system 100 are performed in the same manner as a start-up operation and a power generation operation of a general fuel cell unit, a detailed description of these operations is omitted. Similarly, since operations of the combustion apparatus 103 are performed in the same manner as those of a general combustion apparatus, a detailed description of the operations of the combustion apparatus 103 is omitted. In Embodiment 1, a description is given below assuming that the controller 102 is configured as a single controller, and that the controller controls component devices of the power generation system 100.

Fig. 2 is a flowchart schematically showing operations of the power generation system 100 according to Embodiment 1. As shown in Fig. 2, the controller 102 determines whether or not an operation command to operate the fuel cell unit 101 (i.e., a signal to start up the fuel cell unit 101) has been inputted (step S101). Examples of a case where an operation command to operate the fuel cell unit 101 is inputted include: a case where a user of the power generation system 100 has operated a remote controller, which is not shown, to cause the fuel cell unit 101 to operate; and a case where an operation start time set for the fuel cell unit 101 in advance has arrived.

If an operation command to operate the fuel cell unit 101 has not been inputted (No in step S101), the controller 102 repeats step S101 until an operation command to operate the fuel cell unit 101 is inputted. On the other hand, if it is determined in step S101 that an operation command to operate the fuel cell unit 101 has been inputted (Yes in step S101), the controller 102 proceeds to step S102.

In step S102, the controller 102 causes the ventilation fan 13 to operate. As a result, the outside air flows through the air supply passage 78, and is supplied into the casing 12. At the same time as or after causing the ventilation fan 13 to operate, the controller 102 obtains a detected temperature T inputted from the temperature detector 81, thereby obtaining a temperature T of the outside air that flows through the air supply passage 78. Next, the controller 102 proceeds to step S103. It should be noted that the controller 102 may obtain the detected temperature T from the temperature detector 81 a short period of time before causing the ventilation fan 13 to operate. However, in order to obtain the temperature of the outside air more precisely, it is preferred for the controller 102 to obtain the detected temperature T from the temperature detector 81 at the same time as or after causing the ventilation fan 13 to operate.

In step S103, the controller 102 compares the detected temperature T detected by the temperature detector 81 with a first temperature T1, and determines whether or not the detected temperature T is lower than or equal to the first temperature T1. The first temperature T1 herein is predetermined as a temperature at which the outside air that is supplied into the casing 12 causes water inside the fuel cell unit 101 to freeze up. This temperature may be, for example, a temperature calculated through an experiment or the like in advance, or may be zero degrees Celsius, which is defined as the freezing point of water.

If the detected temperature T is higher than the first temperature T1 (No in step S103), the controller 102 proceeds to step S106, in which the controller 102 causes the fuel cell unit 101 to start up. On the other hand, if the detected temperature T is lower than or equal to the first temperature T1 (Yes in step S 103), the controller 102 proceeds to step S104.

In step S104, the controller 102 determines whether or not the combustion apparatus 103 is in operation. If the combustion apparatus 103 is not in operation (No in step S104), the controller 102 proceeds to step S105, in which the controller 102 stops the ventilation fan 13. Then, the controller 102 repeats the process of step S104 until the combustion apparatus 103 starts operating. It should be noted that if a stop command to stop the fuel cell unit 101 is inputted before the combustion apparatus 103 starts operating, the controller 102 may terminate this control flow.

On the other hand, if the combustion apparatus 103 is in operation (Yes in step S104), the controller 102 proceeds to step S106, in which the controller 102 causes the fuel cell unit 101 to start up. Specifically, the controller 102 causes the fuel gas supply device 14 and the oxidizing gas supply device 15 to operate, thereby starting electric power generation by the fuel cell 11.

When the ventilation fan 13 and the oxidizing gas supply device 15 operate, the outside air is supplied into the casing 12 through the air supply passage 78. When the combustion apparatus 103 operates, the flue gas from the combustion apparatus 103 is discharged to the discharge passage 70 through the exhaust gas passage 77. The temperature of the flue gas is relatively high. For example, in a case where a latent heat recovery boiler that utilizes heat from the flue gas to heat up water is used as the combustion apparatus 103, the temperature of the flue gas is in the range of about 60 °C to 80 °C. Accordingly, the outside air that flows through the air supply passage 78 is heated by the flue gas that flows through the discharge passage 70. In this manner, water inside the fuel cell unit 101 can be prevented from freezing up due to the outside air supplied through the air supply passage 78.

As described above, the power generation system 100 according to Embodiment 1 is configured to detect the temperature of the outside air that is supplied to the fuel cell unit 101 before causing the fuel cell unit 101 to start operating. If the detected temperature is lower than the predetermined first temperature and the combustion apparatus 103 is not in operation, the fuel cell unit 101 is not started up. This makes it possible to prevent a situation where the outside air whose temperature is lower than the first temperature is supplied to the casing 12, causing water inside the fuel cell unit 101 to freeze up, and thereby the operation of the fuel cell unit 101 is hindered.

Then, after the combustion apparatus 103 has operated, the fuel cell unit 101 is caused to start up. Therefore, even if the temperature of the outside air that is introduced into the casing 12 is low, the outside air is, while flowing through the air supply passage 78, heated by the flue gas that flows through the discharge passage 70. Consequently, even though the outside air is supplied into the casing 12 in accordance with the operation of the fuel cell unit 101, the inside of the fuel cell unit 101 can be prevented from freezing up, and stable operation of the power generation system 100 can be realized.

When the fuel cell unit 101 operates, heat is generated together with the electric power generated by the fuel cell 11, and thereby the gas inside the casing 12 is heated up. In addition, the temperature of the off gases from the fuel cell 11 (i.e., the off fuel gas and the off oxidizing gas) also increases. These gases are discharged from the fuel cell unit 101 to the discharge passage 70 through the passages 73, 74, and 75. The outside air that flows through the air supply passage 78 is heated by these discharged gases having relatively high temperatures, and thereby freezing of water in the fuel cell unit 101 due to the outside air can be prevented.

Since the controller 102 obtains the temperature detected by the temperature detector 81 after operating the ventilation fan 13, the temperature of the outside air that is supplied to the casing 12 can be detected more precisely.

Moreover, when the outside air temperature T is lower than the first temperature T1, if the combustion apparatus 103 is not in operation, the ventilation fan 13 is kept in a stopped state. In this manner, freezing in the fuel cell unit 101 due to the low-temperature outside air can be prevented more assuredly.

It should be noted that, in Embodiment 1, the piping of the discharge passage 70 and the piping of the air supply passage 78 form a double pipe. However, Embodiment 1 is not to limited to such a double-pipe configuration, but may be configured in various ways, so long as the piping of the discharge passage 70 and the piping of the air supply passage 78 are provided in such a manner as to allow the gas inside the air supply passage 78 and the gas inside the discharge passage 70 to exchange heat with each other. That is, it is not essential that the piping of the air supply passage 78 and the piping of the discharge passage 70 be provided such that they are in contact with each other. A gap may be formed between the piping of the air supply passage 78 and the piping of the discharge passage 70, so long as the gas inside the air supply passage 78 and the gas inside the discharge passage 70 can exchange heat with each other. Alternatively, piping with a single-pipe structure may be modified such that a wall extending in a direction in which the piping extends is formed inside the piping; of the spaces inside the piping divided by the wall, one space may be used as the air supply passage 78; and the other space may be used as the discharge passage 70.

Although in Embodiment 1 the fuel cell unit 101 is disposed upstream of the flow of exhaust gas from the combustion apparatus 103, the position where the fuel cell unit 101 is disposed is not thus limited. Alternatively, the combustion apparatus 103 may be disposed upstream of the flow of exhaust gas from the fuel cell unit 101. Further alternatively, the combustion apparatus 103 and the fuel cell unit 101 may be connected to the discharge passage 70 and the air supply passage 78 in a parallel manner.

In the operations of the power generation system 100, when the combustion apparatus 103 is not in operation (No in step S104), the controller 102 returns to the process of step S104. Instead, when the combustion apparatus 103 is not in operation (No in step S104), the controller 102 may return to the process of step S102.

### (Embodiment 2)

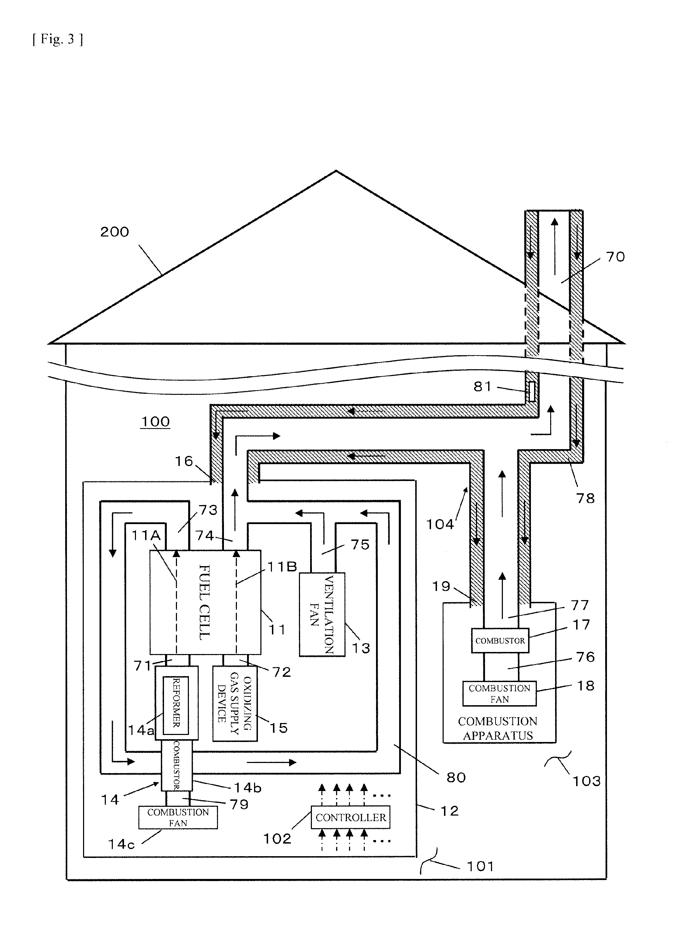

The power generation system 100 according to Embodiment 2 of the present invention serves as an example where the power generation system 100 further includes a hydrogen generation apparatus 14. The hydrogen generation apparatus 14 includes a reformer 14a configured to generate a raw material gas and a combustor 14b configured to heat the reformer 14a. Fig. 3 is a schematic diagram showing a schematic configuration of the power generation system 100 according to Embodiment 2 of the present invention.

As shown in Fig. 3, the fundamental configuration of the power generation system 100 according to Embodiment 2 of the present invention is the same as that of the power generation system 100 according to Embodiment 1. However, the power generation system 100 according to Embodiment 2 is different from the power generation system 100 according to Embodiment 1 in that, in the power generation system 100 according to Embodiment 2, the fuel gas supply device 14 is configured as the hydrogen generation apparatus 14, and the off fuel gas passage 73 is connected to the combustor 14b of the hydrogen generation apparatus 14.

### (Configuration of Power Generation System)

The hydrogen generation apparatus 14 includes the reformer 14a, the combustor 14b, and a combustion fan 14c. The downstream end of the off fuel gas passage 73 is connected to the combustor 14b. The off fuel gas from the fuel gas passage 11A of the fuel cell 11 flows through the off fuel gas passage 73, and is supplied to the combustor 14b as a combustion fuel. The combustion fan 14c is connected to the combustor 14b via an air supply passage 79. The combustion fan 14c may be configured in any form, so long as the combustion fan 14c is configured to supply combustion air to the combustor 14b. For example, the combustion fan 14c is configured as a fan device, such as a fan or a blower. By means of the combustion fan 14c, the gas inside the casing 12 is supplied to the combustor 14b through the air supply passage 79 as combustion air. Accordingly, the combustor 14b combusts the off fuel gas and the combustion air. As a result, a flue gas and heat are generated.

The upstream end of a flue gas passage 80 is connected to the combustor 14b. The downstream end of the flue gas passage 80 is connected to the discharge passage 70. Accordingly, the flue gas generated in the combustor 14b is, after heating the reformer 14a and other components, discharged to the flue gas passage 80. Then, the flue gas flows through the flue gas passage 80, and is then discharged to the discharge passage 70. The flue gas discharged to the discharge passage 70 flows through the discharge passage 70, and is then discharged to the outside of the power generation system 100 (the building 200).

A raw material supply device (not shown) is connected to the reformer 14a, and supplies a raw material to the reformer 14a. A steam supply device (not shown) is connected to the reformer 14a, and supplies steam to the reformer 14a. For example, natural gas containing methane as a main component, or LP gas, may be used as the raw material. The reformer 14a includes a reforming catalyst. For example, any substance capable of catalyzing a steam reforming reaction through which to generate a hydrogen-containing gas from the raw material and steam may be used as the reforming catalyst. For example, a ruthenium-based catalyst in which a catalyst carrier such as alumina carries ruthenium (Ru), or a nickel-based catalyst in which a catalyst carrier such as alumina carries nickel (Ni), may be used as the reforming catalyst. In the reformer 14a, a reforming reaction between the raw material and steam occurs in the presence of the reforming catalyst, and thereby a hydrogen-containing gas is generated.

The inlet of the fuel gas passage 11A of the fuel cell 11 is connected to the reformer 14a via the fuel gas supply passage 71. The hydrogen-containing gas generated by the reformer 14a flows through the fuel gas supply passage 71 as a fuel gas, and is then supplied to the fuel gas passage 11A of the fuel cell 11.

Although in Embodiment 2 the reformer 14a is directly connected to the fuel cell 11, Embodiment 2 is not limited to such a configuration. For example, a shift converter and/or a carbon monoxide remover may be provided between the reformer 14a and the fuel cell 11. The shift converter includes a shift conversion catalyst (e.g., a copper-zinc based catalyst), and the carbon monoxide remover includes an oxidation catalyst (e.g., a ruthenium-based catalyst) or a methanation catalyst (e.g., a ruthenium-based catalyst). By means of the shift converter and the carbon monoxide remover, carbon monoxide in the hydrogen-containing gas sent out of the reformer 14a is reduced.

Although in the above-described configuration the off fuel gas discharged from the fuel cell 11 is supplied to the combustor 14b as a combustion fuel, the present embodiment is not thus limited. The present embodiment may further include a combustion fuel supply device configured to supply a combustion fuel to the combustor 14b.

The power generation system 100 according to Embodiment 2 with the above-described configuration can also realize the prevention of freezing inside the fuel cell unit 101 by performing the flow of operations according to the examples described in Embodiment 1.

In the power generation system 100 according to Embodiment 2, when the fuel cell unit 101 starts operating, first, it is necessary to increase the temperature of the reforming catalyst in the reformer 14a of the hydrogen generation apparatus 14 to a suitable temperature for the reforming reaction. For this reason, the combustion fan 14c is operated in order to supply combustion air to the combustor 14b so that the combustion fuel and the combustion air will be combusted in the combustor 14b. As a result of the combustion fan 14c being operated, the outside air is supplied into the casing 12 through the air supply passage 78. The outside air flowing through the air supply passage 78 is heated by the flue gas from the combustion apparatus 103, which flows through the discharge passage 70. Therefore, even if the outside air temperature is a sub-zero temperature, a situation where water inside the fuel cell unit 101 freezes up and thereby hinders the operation of the hydrogen generation apparatus 14 can be prevented.

### (Operation 1 of Power Generation System)

Operation 1 described below serves as an example where, in the power generation system 100 according to Embodiment 2 of the present invention, the controller is configured such that if a stop command has been inputted to the combustion apparatus when a predetermined period has elapsed after the start of the start-up of the fuel cell unit 101, the controller stops the combustion apparatus.

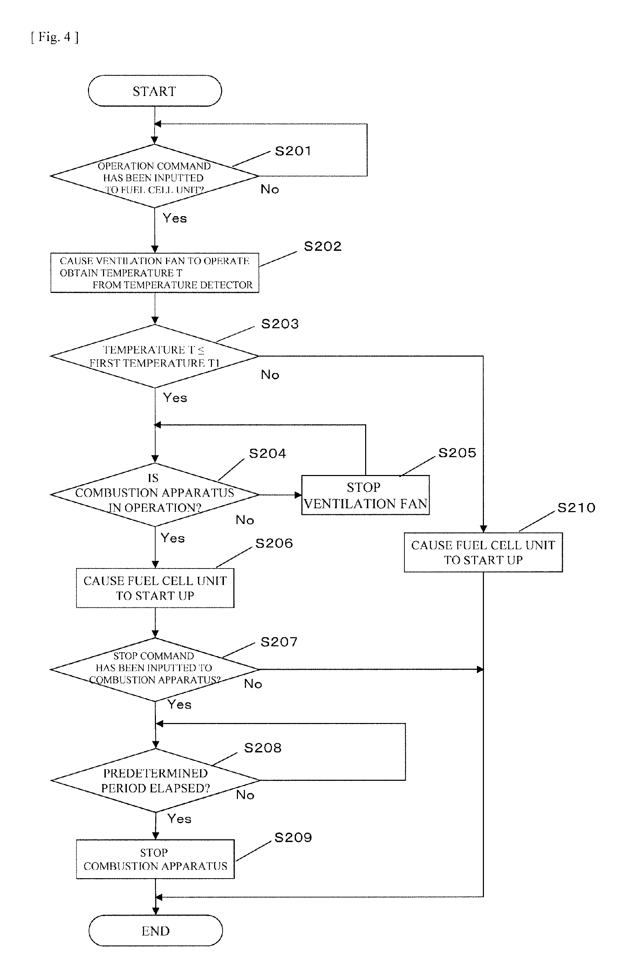

Fig. 4 is a flowchart schematically showing operations of the power generation system 100 according to Embodiment 2. Since process steps S201 to S206 shown in Fig. 4 are the same as the process steps S101 to S106 shown in Fig. 2, the description of the process steps S201 to S206 is omitted. However, in a case where the detected temperature T is higher than the first temperature T1 (No in step S203), the controller 102 causes the fuel cell unit 101 to start up (step S210), and ends the process.

As shown in Fig. 4, after the fuel cell unit 101 has started the start-up operation (step S206), the controller 102 determines whether or not a stop command to stop the combustion apparatus 103 (i.e., a signal to stop the combustion apparatus 103) has been inputted (step S207). If a stop command to stop the combustion apparatus 103 has not been inputted (No in step S207), the controller 102 continues the start-up of the fuel cell unit 101 to cause the fuel cell unit 101 to perform electric power generation. On the other hand, if a stop command has been inputted to the combustion apparatus 103 (Yes in step S207), the controller 102 proceeds to the next step S208.

In step S208, the controller 102 determines whether a time that has elapsed after the start of the start-up of the fuel cell unit 101 has reached a predetermined period (a first period). It should be noted that when the fuel cell unit 101 is started up (step S206), the controller 102 measures a time that has elapsed after the start of the start-up. If the elapsed time has not reached the predetermined period (No in step S208), the controller 102 repeats step S208 while keeping the combustion apparatus 103 in operation until the elapsed time reaches the predetermined period. If the elapsed time has reached the predetermined period (Yes in step S208), the controller 102 proceeds to the next step S209.

In step S209, the controller 102 stops the combustion apparatus 103 from operating while causing the fuel cell unit 101 to continue operating. The "predetermined period" herein is a time that is necessary for the outside air supplied into the casing 12 to be heated by the exhaust gas from the fuel cell unit 101 to a temperature at which freezing in the fuel cell unit 101 does not occur. For example, at a point when the start-up operation of the fuel cell unit 101 is completed and the operation shifts to the power generation operation, the temperature of the exhaust gas from the fuel cell unit 101 has been increased and is high. Therefore, a time that is necessary for the operation of the fuel cell unit 101 to shift to the power generation operation may be set as the predetermined period.

As described above, according to Operation 1 of the power generation system, even if a stop command to stop the combustion apparatus 103 has been inputted, the combustion apparatus 103 is not stopped until the time elapsed from the start-up of the fuel cell unit 101 reaches the predetermined period. In this manner, until the elapsed time reaches the predetermined period, i.e., in a state where the temperature of the exhaust gas from the fuel cell unit 101 is low, the combustion apparatus 103 is operated. Accordingly, the low-temperature outside air is heated by the flue gas from the combustion apparatus 103 and the exhaust gas from the fuel cell unit 101, and thereby freezing in the fuel cell unit 101 can be prevented more assuredly.

When the elapsed time reaches the predetermined period, the combustion apparatus 103 is stopped in accordance with the stop command. This makes it possible to reduce energy consumption of the combustion apparatus 103, thereby improving the energy efficiency of the power generation system 100.

Moreover, at a point when the elapsed time reaches the predetermined period, the temperature of the exhaust gas from the fuel cell unit 101 has been increased. Accordingly, even though the combustion apparatus 103 is stopped, the outside air can be heated by the exhaust gas from the fuel cell unit 101, and thereby freezing in the fuel cell unit 101 can be prevented more assuredly.

It should be noted that, in Operation 1 of the power generation system shown in Fig. 4, the ventilation fan 13 is caused to operate in step S202. However, it is not essential to cause the ventilation fan 13 to operate in step S202. In a case where the ventilation fan 13 is not caused to operate in step S202, the process of stopping the ventilation fan in step S205 is omitted.

### (Operation 2 of Power Generation System)

Operation 2 described below serves as an example where, in the power generation system 100 according to Embodiment 2 of the present invention, the controller 102 is configured to stop the combustion apparatus 103 when the temperature of the outside air that flows through the air supply passage 78 has increased.

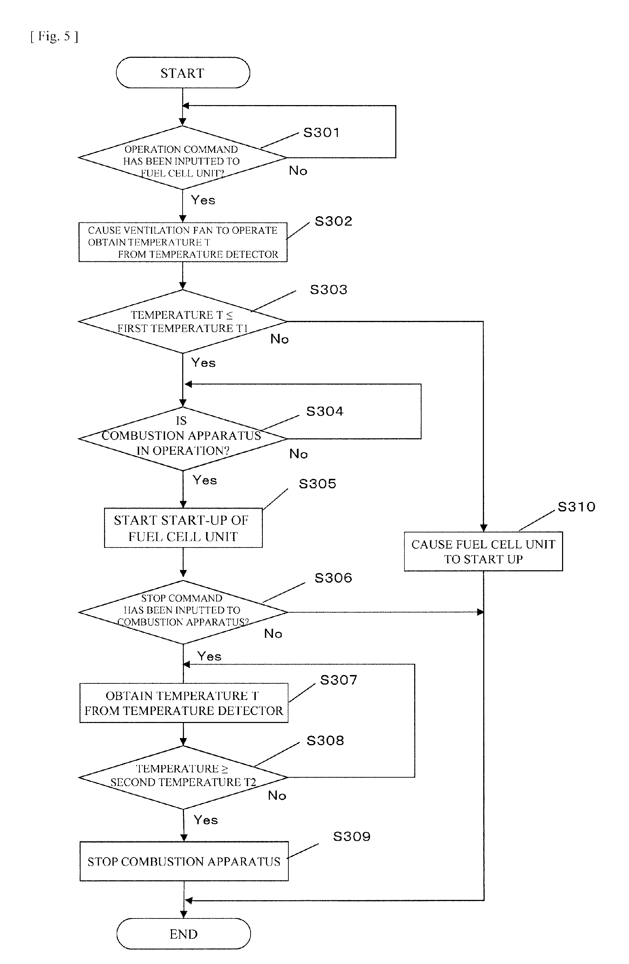

Fig. 5 is a flowchart schematically showing operations of the power generation system 100 according to Embodiment 2. Since process steps S301 to S303 shown in Fig. 4 are the same as the process steps S101 to S103 shown in Fig. 2, the description of the process steps 301 to S303 is omitted. However, in a case where the detected temperature T is higher than the first temperature T1 (No in step S303), the controller 102 causes the fuel cell unit 101 to start up (step S310), and ends the process.

As shown in Fig. 5, in step S304, the controller 102 determines whether or not the combustion apparatus 103 is in operation. If the combustion apparatus 103 is not in operation (No in step S304), the controller 102 repeats step S304 until the combustion apparatus 103 starts operating in accordance with an operation command that causes the combustion apparatus 103 to operate. While repeating step S304, the controller 102 may stop the ventilation fan 13.

On the other hand, if it is determined in step S304 that the combustion apparatus 103 is in operation (Yes in step S304), the controller 102 proceeds to step S305, in which the controller 102 starts the start-up of the fuel cell unit 101. Next, the controller 102 proceeds to step S306, in which the controller 102 determines whether or not a stop command has been inputted to the combustion apparatus 103. If a stop command to stop the combustion apparatus 103 has not been inputted (No in step S306), the controller 102 causes the fuel cell unit 101 to perform electric power generation while keeping the combustion apparatus 103 in operation.

On the other hand, if a stop command has been inputted to the combustion apparatus 103 (Yes in step S306), the controller 102 proceeds to the next step S307. In step S307, the controller 102 obtains, from the temperature detector 81, the detected temperature T of the outside air that flows through the air supply passage 78. The outside air is heated in the air supply passage 78 not only by the flue gas from the combustion apparatus 103, which flows through the discharge passage 70, but also by the flue gas from the combustor 14b of the fuel cell unit 101, which flows through the discharge passage 70.

Next, in step S308, the controller 102 compares the detected temperature T detected by the temperature detector 81 with a second temperature T2. From the comparison result, the controller 102 determines whether or not the detected temperature T is lower than the second temperature T2. The second temperature T2 herein is higher than the first temperature T1. However, the second temperature T2 may be the same temperature as the first temperature T1. Specifically, at a point when the determination is made, the outside air has been heated by the flue gas from the combustion apparatus 103 and the flue gas from the fuel cell unit 101. Accordingly, the temperature T of the outside air at the point is higher than that at a point when the detected temperature T is compared with the first temperature T1 in step S303. For this reason, usually, the second temperature T2 is set to a temperature higher than the first temperature T1. It should be noted that if the second temperature T2 is set such that the second temperature T2 is, at the lowest, the same as the first temperature, then the second temperature T2 will not cause water inside the fuel cell unit 101 to freeze up due to the outside air that is supplied into the casing 12. Therefore, the second temperature T2 may be set to the same temperature as the first temperature T1.

If the detected temperature T detected by the temperature detector 81 is lower than the second temperature T2 (No in step S307), it means that the outside air temperature T is significantly low, and if the combustion apparatus 103 is stopped, freezing in the fuel cell unit 101 may occur. For this reason, the controller 102 repeats step S307, and keeps the combustion apparatus 103 in operation until the temperature of the outside air supplied to the casing 12 increases. On the other hand, if the detected temperature T is higher than or equal to the second temperature T2 (Yes in step S307), the controller 102 proceeds to step S309.

In step S309, the controller 102 stops the combustion apparatus 103 while continuing the start-up operation of the fuel cell unit 101. When the hydrogen generation apparatus 14 starts generating the fuel gas, the controller 102 starts the power generation operation of the fuel cell unit 101.

As described above, according to Operation 2 of the power generation system, even if a stop command to stop the combustion apparatus 103 has been inputted, the combustion apparatus 103 is not stopped until the temperature T of the outside air supplied to the casing 12 reaches the second temperature. Accordingly, the combustion apparatus 103 is operated if the temperature of the exhaust gas from the fuel cell unit 101 is low and the temperature T of the outside air has not been heated to the second temperature or higher. As a result, the low-temperature outside air is heated by the flue gas from the combustion apparatus 103 and the exhaust gas from the fuel cell unit 101, and thereby freezing in the fuel cell unit 101 can be prevented more assuredly.

When the temperature T of the outside air reaches the second temperature T2, the combustion apparatus 103 is stopped in accordance with the stop command. This makes it possible to reduce energy consumption of the combustion apparatus 103, thereby improving the energy efficiency of the power generation system 100.

Moreover, at a point when the temperature T of the outside air reaches the second temperature T2, the temperature of the exhaust gas from the fuel cell unit 101 has been increased. Accordingly, even though the combustion apparatus 103 is stopped, the outside air can be heated by the exhaust gas from the fuel cell unit 101, and thereby freezing in the fuel cell unit 101 can be prevented more assuredly.

It should be noted that the power generation system 100 is configured to stop the combustion apparatus 103 if it is determined in step S308 that the detected temperature T has become the second temperature T2 or higher. After the combustion apparatus 103 is thus stopped, the temperature detector 81 may continue measuring the temperature T of the outside air that flows through the air supply passage 78, and when the detected temperature T has become lower than the second temperature T2, the combustion apparatus 103 may be started up. However, such an operation is not necessary for the general fuel cell unit 101 since the outside air that flows through the air supply passage 78 is sufficiently heated by the heat from the flue gas discharged from the combustor 14b.

It should be noted that, in Operation 2 of the power generation system shown in Fig. 5, the ventilation fan 13 is caused to operate in step S302. However, it is not essential to cause the ventilation fan 13 to operate in step S302.

### (Embodiment 3)

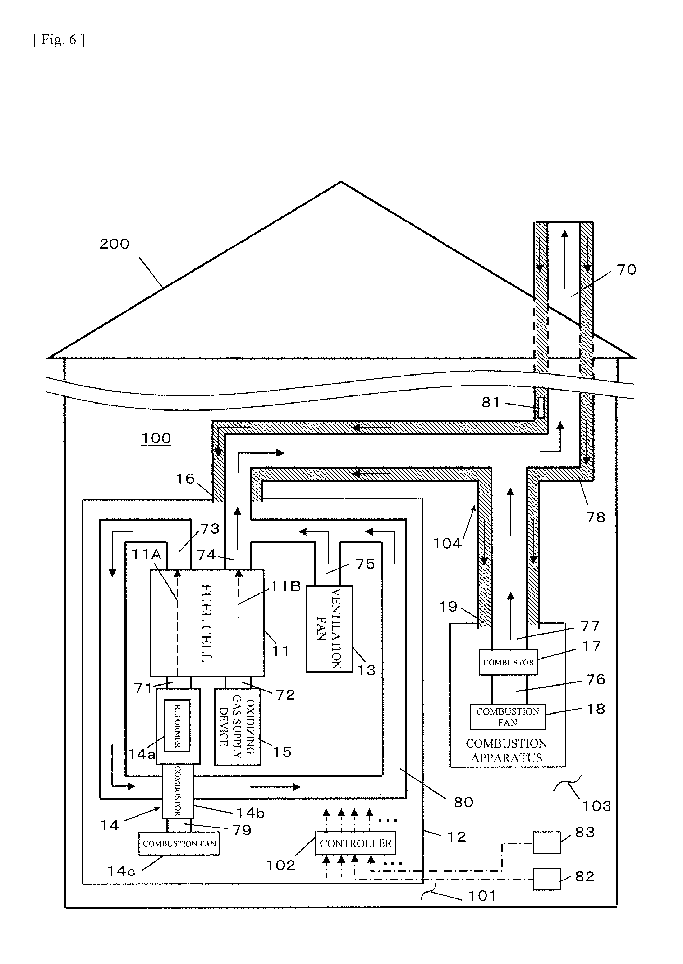

The power generation system 100 according to Embodiment 3 of the present invention serves as an example where the power generation system 100 further includes a load measuring unit configured to measure the consumption amount of at least one of electric power and heat consumed by a user of the power generation system 100. Fig. 6 is a schematic diagram showing a schematic configuration of the power generation system 100 according to Embodiment 3 of the present invention.

As shown in Fig. 6, the fundamental configuration of the power generation system 100 according to Embodiment 3 is the same as that of the power generation system 100 according to Embodiment 2. However, the power generation system 100 according to Embodiment 3 is different from the power generation system according to Embodiment 2, in that the power generation system 100 according to Embodiment 3 further includes a power load measuring unit 82 and a heat load measuring unit 83. It should be noted that, in the power generation system 100 according to Embodiment 3, the fuel gas supply device 14 described in Embodiment 1 may be used in place of the hydrogen generation apparatus 14.

The power load measuring unit 82 is a load measuring unit configured to measure electric power consumed by a consumer (i.e., the user of the power generation system 100). The consumer is provided with the power generation system 100 and an electrical load. The fuel cell unit 101 and a commercial power system are interconnected with each other, and supply electric power to the consumer. The electrical load consumes electric power supplied from the commercial power system or the fuel cell unit 101. It should be noted that since the fuel cell unit 101 consumes electric power supplied from the commercial power system when starting up, the fuel cell unit 101 is also regarded as one electrical load. However, since the fuel cell unit 101 supplies electric power when performing electric power generation, the fuel cell unit 101 is distinguished from the other general electrical load that only consumes electric power.

The power load measuring unit 82 includes a power meter, and is provided on, for example, a power distribution line that connects the commercial power system and the consumer. On the power distribution line, the power load measuring unit 82 is disposed at a position that is closer to the commercial power system than a merge point where the power distribution line merges with the fuel cell unit 101. This allows the power load measuring unit 82 to detect electric power that is supplied from the commercial power system to the consumer, and output a detected value to the controller 102 as a first power consumption.

The heat load measuring unit 83 is a load measuring unit configured to measure the amount of heat consumed by the consumer (the user of the power generation system 100). The heat load measuring unit 83 includes a flowmeter and a temperature sensor, which are provided, for example, at the outlet of the hot water storage tank. This allows the heat load measuring unit 83 to detect the temperature of hot water flowing out of the hot water storage tank by means of the temperature sensor, and to detect the flow rate of the hot water by means of the flowmeter. Based on detected values of the temperature and the flow rate, the heat load measuring unit 83 calculates the amount of heat supplied from the hot water storage tank, and outputs the calculated amount of heat to the controller 102 as a heat consumption.

The controller 102 obtains the first power consumption from the power load measuring unit 82 and the heat consumption from the heat load measuring unit 83. While the fuel cell unit 101 is generating electric power, the consumer's electrical load is fed with not only electric power supplied from the commercial power system, i.e., the first power consumption, but also electric power supplied from the fuel cell unit 101 (a second power consumption). Accordingly, the controller 102 obtains the second power consumption, i.e., the electric power supplied from the fuel cell unit 101 to the electrical load, based on, for example, the amount of electric power generated by the fuel cell unit 101. Then, the controller 102 calculates a power consumption of the consumer based on the first power consumption obtained from the power load measuring unit 82 and the second power consumption obtained from the fuel cell unit 101.

Based on the power consumption and the heat consumption of the consumer, the controller 102 creates and stores a first operation plan of the fuel cell unit 101. Specifically, the controller 102 estimates, based on stored information, an amount of electric power and an amount of heat to be consumed in each of a plurality of time periods. Based on the estimated information, the controller 102 creates an operation plan of the fuel cell unit 101 as the first operation plan.

In addition, based on operating periods of the combustion apparatus 103 that are set by the user in advance, the controller 102 creates and stores a second operation plan. The setting of the operating periods by the user may be performed by using an operating unit, which is not shown.

The controller 102 operates the power generation system 100 based on the predetermined first and second operation plans. Specifically, the controller 102 operates the fuel cell unit 101 in accordance with the first operation plan, and operates the combustion apparatus 103 in accordance with the second operation plan. The second operation plan may be a plan that causes the combustion apparatus 103 to operate independently of the operation of the fuel cell unit 101.

Specifically, the meaning of "operates the fuel cell unit 101 in accordance with the first operation plan" is, for example, as follows: in a case where the first operation plan specifies a start-up time and a stop time of the fuel cell unit 101, the controller 102 starts up the fuel cell unit 101 at the start-up time, operates the fuel cell unit 101 at a rated output, and stops the fuel cell unit 101 at the stop time; or in a case where the first operation plan specifies outputs of the fuel cell unit 101 for respective time periods in one day, the controller 102 operates the fuel cell unit 101 in each time period in such a manner as to generate electric power that is the output specified for the time period. Here, operating the fuel cell unit 101 includes starting up and stopping the fuel cell unit 101.

Specifically, the meaning of "operates the combustion apparatus 103 in accordance with the second operation plan" is, for example, as follows: in a case where the second operation plan specifies a start-up time and a stop time of the combustion apparatus 103, the controller 102 starts up the combustion apparatus 103 at the start-up time, and stops the combustion apparatus 103 at the stop time; alternatively, in a case where the second operation plan specifies outputs of the combustion apparatus 103 for respective time periods in one day, the controller 102 operates the combustion apparatus 103 in each time period in such a manner that an amount of heat that is the output specified for the time period can be obtained; and further alternatively, in a case where the second operation plan specifies outputs of the combustion apparatus 103 for respective days in one week, the controller 102 operates the combustion apparatus 103 in each day in such a manner that an amount of heat that is the output specified for the day can be obtained. Here, operating the combustion apparatus 103 includes starting up and stopping the combustion apparatus 103.

Next, operations of the power generation system 100 according to Embodiment 3 are described. The controller 102 causes the fuel cell unit 101 to start up, perform electric power generation, and stop based on the first operation plan. When an operation command to operate the fuel cell unit 101 is inputted, if the detected temperature T detected by the temperature detector 81 is lower than or equal to the first temperature T1, the controller 102 determines whether or not the combustion apparatus 103, which operates based on the second operation plan, is in operation.

If the combustion apparatus 103 is in operation, the controller 102 starts up the fuel cell unit 101, and immediately thereafter operates the fuel cell unit 101 based on the first operation plan.

On the other hand, if the combustion apparatus 103 is in a stopped state, the controller 102 interrupts the start-up of the fuel cell unit 101 until the combustion apparatus 103 starts operating. Then, after the combustion apparatus 103 has started operating, the controller 102 determines whether or not, in the first operation plan, the current time is in a time period in which the fuel cell unit 101 is scheduled to perform electric power generation. If the current time is in such a power-generating time period, the controller 102 causes the fuel cell unit 101 to start up, and operates the fuel cell unit 101 based on the first operation plan.

Accordingly, even if low-temperature outside air is supplied to the fuel cell unit 101, since the combustion apparatus 103 is in operation when the fuel cell unit 101 operates, the outside air exchanges heat with the exhaust gas from the combustion apparatus 103, and is thereby heated up. As a result, freezing of water in the fuel cell unit 101 due to the outside air is prevented, and thereby the operation of the fuel cell unit 101 can be prevented from being hindered. Therefore, the power generation system 100, which is capable of stable operation, can be realized.

By operating the fuel cell unit 101 and the combustion apparatus 103 based on the first operation plan and the second operation plan, the power generation system 100 can be operated in accordance with demands from the user.

Although in Embodiment 3 the fuel cell unit 101 and the combustion apparatus 103 are operated based on the above-described first operation plan and second operation plan, at least one of the first operation plan and the second operation plan may be changed, which makes it possible to more efficiently operate the power generation system 100 in accordance with demands from the user.

As one example, the first operation plan may be changed. Specifically, in Embodiment 3, in a case where the combustion apparatus 103 starts operating after an operation command to operate the fuel cell unit 101 has been inputted, if the time at which the combustion apparatus 103 starts operating is in a power-generating time period in the first operation plan, then the controller 102 starts up the fuel cell unit 101. However, even if the time at which the combustion apparatus 103 starts operating is not in a power-generating time period in the first operation plan, so long as the time at which the combustion apparatus 103 starts operating is after the operation command to operate the fuel cell unit 101 has been inputted, the controller 102 may change the first operation plan and start up the fuel cell unit 101.

As another example, the second operation plan may be changed. Specifically, in Embodiment 3, when an operation command to operate the fuel cell unit 101 is inputted based on the first operation plan, if the detected temperature T is lower than or equal to the first temperature T1, and the combustion apparatus 103 is not in operation based on the second operation plan, the controller 102 does not start up the fuel cell unit 101. However, when the operation command to operate the fuel cell unit 101 is inputted, even if the combustion apparatus 103 is not in operation, the controller 102 may change the second operation plan to immediately cause the combustion apparatus 103 to operate, and then start up the fuel cell unit 101.

It should be noted that, on the power distribution line that connects between the commercial power system and the consumer, the power load measuring unit 82 is disposed at the position that is closer to the commercial power system than the merge point where the power distribution line merges with the fuel cell unit 101. However, as an alternative, on the power distribution line that connects between the commercial power system and the consumer, the power load measuring unit 82 may be disposed at a position that is closer to the electrical load than the merge point where the power distribution line merges with the fuel cell unit 101. In this case, the power load measuring unit 82 measures a power consumption of the consumer, which is the sum of: the first power consumption, i.e., electric power supplied from the commercial power system; and the second power consumption, i.e., electric power supplied from the fuel cell unit 101 to the electrical load. The controller 102 creates the first operation plan based on the power consumption of the consumer and the heat consumption of the consumer.

### (Other Embodiments)

In Embodiment 1 described above, the power generation system 100 may be operated in accordance with each of the flow of Operation 1 and the flow of Operation 2 of the power generation system 100 according to Embodiment 2, which are shown in Fig. 4 and Fig. 5. This allows the power generation system 100 according to Embodiment 1 to provide the same operational advantages as those provided by the power generation system 100 according to Embodiment 2.

In Embodiment 2 described above, the power generation system 100 may be operated in accordance with the operation flow of the power generation system 100 according to Embodiment 1, which is shown in Fig. 2. This allows the power generation system 100 according to Embodiment 2 to provide the same operational advantages as those provided by the power generation system 100 according to Embodiment 1.

In Embodiment 3 described above, the power generation system 100 may be operated in accordance with the operation flow of the power generation system 100 according to Embodiment 1, which is shown in Fig. 2, and in accordance with each of the flow of Operation 1 and the flow of Operation 2 of the power generation system 100 according to Embodiment 2, which are shown in Fig. 4 and Fig. 5. This allows the power generation system 100 according to Embodiment 3 to provide the same operational advantages as those provided by the power generation system 100 according to Embodiment 1.

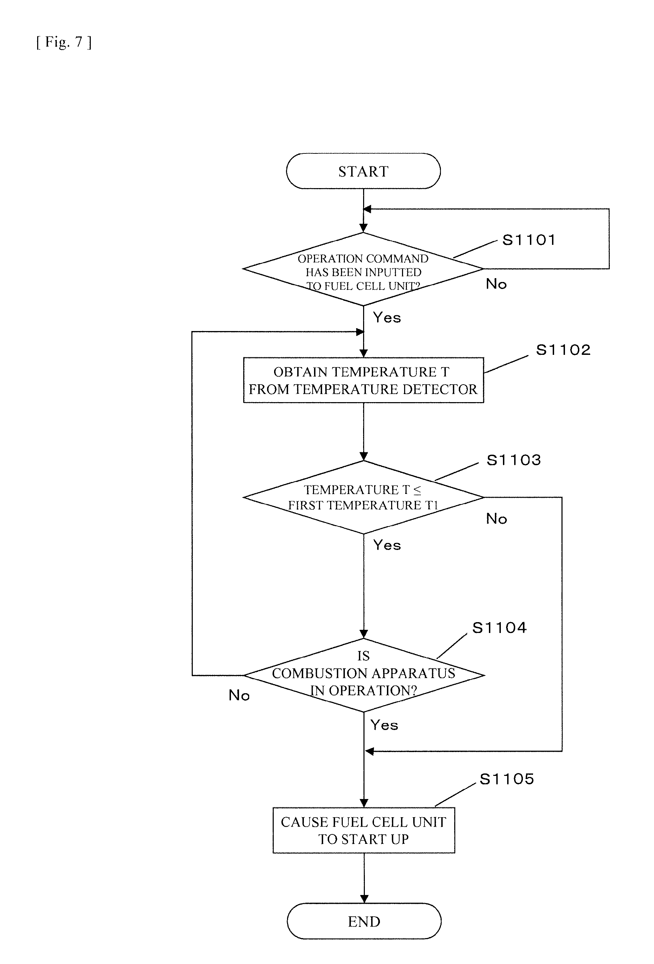

In all of the above-described embodiments, the power generation system 100 may be operated in accordance with an operation flow shown in Fig. 7. Fig. 7 is a flowchart showing operations of the power generation system 100 according to each embodiment. It should be noted that the first temperature indicated in the flowchart is the same as the first temperature in Embodiment 1.

As shown in Fig. 7, the controller 102 determines whether or not an operation command to operate the fuel cell unit 101 has been inputted (step S1101). If an operation command to operate the fuel cell unit 101 has not been inputted (No in step S1101), the controller 102 repeats step S1101 until an operation command to operate the fuel cell unit 101 is inputted. On the other hand, if it is determined in step S1101 that an operation command to operate the fuel cell unit 101 has been inputted (Yes in step S1101), the controller 102 proceeds to step S1102.

In step S1102, the controller 102 obtains the detected temperature T from the temperature detector 81. Next, in step S1103, the controller 102 determines whether or not the detected temperature T detected by the temperature detector 81 is lower than or equal to the first temperature T1. If the detected temperature T is higher than the first temperature T1 (No in step S1103), the controller 102 causes the fuel cell unit 101 to start up (step S1105). On the other hand, if the detected temperature T is lower than or equal to the first temperature T1 (Yes in step S1103), the controller 102 proceeds to step S1104.

In step S1104, the controller 102 determines whether or not the combustion apparatus 103 is in operation. If the combustion apparatus 103 is not in operation (No in step S1104), the controller 102 returns to the process of step S1102. In this manner, the controller 102 refrains from starting up the fuel cell unit 101 until the detected temperature T becomes higher than the first temperature (NO in step S1103) or until the combustion apparatus 103 starts operating (YES in step S1104). On the other hand, if the combustion apparatus 103 is in operation (Yes in step S1104), the controller 102 causes the fuel cell unit 101 to start up (step S1105).

As described above, the combustion apparatus 103 is in operation when the fuel cell unit 101 is started up. Accordingly, even if the temperature of the outside air is low, the outside air is heated by the flue gas from the combustion apparatus 103, and thereby the temperature of the outside air that flows into the fuel cell unit 101 increases. Therefore, freezing of water inside the fuel cell unit 101 due to the outside air can be prevented.

It should be noted that, in the flowchart of Fig. 7, if the combustion apparatus 103 is not in operation (No in step S1104), the controller 102 returns to the process of step S1102. However, as an alternative, the controller 102 may return to the process of step S1101 or S1104 in the case of No in step S1104.

Any of the above-described embodiments may be combined with each other, so long as the combined embodiments do not contradict with each other. From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. The structural and/or functional details may be substantially altered without departing from the spirit of the present invention.

### Industrial Applicability

The power generation system according to the present invention allows the fuel cell to perform electric power generation in a stable manner, and makes it possible to improve the durability of the fuel cell unit. Therefore, the power generation system according to the present invention is useful in the field of fuel cells.

### Reference Signs List

- 11: fuel cell
- 11A: fuel gas passage
- 11B: oxidizing gas passage
- 12: casing
- 13: ventilation fan
- 14: fuel gas supply device (hydrogen generation apparatus)
- 14a: reformer
- 14b: combustor
- 14c: combustion fan
- 15: oxidizing gas supply device
- 16: hole
- 17: combustor
- 18: combustion fan
- 19: hole
- 70: discharge passage
- 71: fuel gas supply passage
- 72: oxidizing gas supply passage
- 73: off fuel gas passage
- 74: off oxidizing gas passage
- 75: ventilation passage
- 76: combustion air supply passage
- 77: exhaust gas passage
- 78: air supply passage
- 79: air supply passage
- 80: flue gas passage
- 81: temperature detector
- 82: power load measuring unit (load measuring unit)
- 83: heat load measuring unit (load measuring unit)
- 100: power generation system
- 101: fuel cell unit
- 102: controller
- 103: combustion apparatus
- 104: supply and exhaust mechanism
- 200: building

## Claims

1. A power generation system comprising:
a fuel cell unit including a fuel cell configured to generate electric power by using a fuel gas and an oxidizing gas, a casing housing the fuel cell, an air supply device configured to introduce outside air into the casing through an air supply passage, and a temperature detector configured to detect a temperature of the outside air;
a combustion apparatus configured to combust a combustible gas and discharge a flue gas through a discharge passage; and
a controller, wherein
the air supply passage is configured to exchange heat with the discharge passage, and
the controller is configured to refrain from causing the fuel cell unit to start up even if a start-up signal has been inputted to the fuel cell unit if the temperature detected by the temperature detector is lower than or equal to a predetermined first temperature and the combustion apparatus is not in operation.

2. The power generation system according to claim 1, wherein the controller is configured to:
cause the air supply device to operate if a start-up signal has been inputted to the fuel cell unit; and
refrain from causing the fuel cell unit to start up if the temperature detected by the temperature detector is lower than or equal to the first temperature and the combustion apparatus is not in operation.

3. The power generation system according to claim 1 or 2, wherein
if the temperature detected by the temperature detector is lower than or equal to the first temperature, the controller causes the fuel cell unit to start up after the combustion apparatus has operated.

4. The power generation system according to claim 3, wherein
if the temperature detected by the temperature detector is lower than or equal to the first temperature, the controller refrains from stopping the combustion apparatus for a predetermined first period after the fuel cell unit has started a start-up.

5. The power generation system according to claim 3, wherein
if the temperature detected by the temperature detector is lower than or equal to the first temperature, the controller refrains from stopping the combustion apparatus from when the fuel cell unit starts up to when the temperature detected by the temperature detector becomes a predetermined second temperature.

6. The power generation system according to any one of claims 1 to 5, comprising load measuring means configured to measure at least one of an amount of electric power and an amount of heat consumed by a user of the power generation system, wherein
the controller:
operates the fuel cell unit in accordance with the first operation plan, which is created based on at least one of the amount of electric power and the amount of heat measured by the load measuring means; and
controls the combustion apparatus in accordance with the second operation plan, which is created based on an operating period set by the user.

7. The power generation system according to claim 6, wherein
in a case where a start-up time of the combustion apparatus, which is specified in the second operation plan, is set as a time that is subsequent to a start-up time of the fuel cell unit, which is specified in the first operation plan, if the temperature detected by the temperature detector is lower than or equal to the first temperature, the controller changes at least one of the first operation plan and the second operation plan, such that the start-up time of the combustion apparatus becomes a time that is prior to the start-up time of the fuel cell unit.

8. A method of operating a power generation system, the power generation system including:
a fuel cell unit configured such that a fuel cell is housed inside a casing, into which outside air is introduced through an air supply passage; and a combustion apparatus configured to combust a combustible gas and discharge a flue gas through a discharge passage, the flue gas being generated as a result of combusting the combustible gas, the air supply passage and the discharge passage being configured in such a manner as to allow a medium flowing through the air supply passage and a medium flowing through the discharge passage to exchange heat with each other,
the method comprising:
detecting a temperature of the outside air that is introduced into the casing; and
refraining from causing the fuel cell unit to start up if the detected temperature is lower than or equal to the first temperature and the combustion apparatus is not in operation.
